(19) Europäisches Patentamt / European Patent Office / Office européen des brevets

(11) **EP 3 792 173 B1**

(12) **EUROPEAN PATENT SPECIFICATION**

(45) Date of publication and mention
of the grant of the patent:
**27.04.2022 Bulletin 2022/17**

(21) Application number: **19197567.1**

(22) Date of filing: **16.09.2019**

(51) International Patent Classification (IPC):
**B64C 1/06** $^{(2006.01)}$

(52) Cooperative Patent Classification (CPC):
**B64C 1/06**

(54) **FAIL-SAFE SYSTEM INTENDED FOR USE IN AN AIRCRAFT**

ZUR VERWENDUNG IN EINEM FLUGZEUG VORGESEHENES, AUSFALLSICHERES SYSTEM

SYSTÈME DE SÉCURITÉ DESTINÉ À ÊTRE UTILISÉ DANS UN AÉRONEF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.03.2021 Bulletin 2021/11**

(73) Proprietor: **SKF Aerospace France**
**78180 Montigny-le-Bretonneux (FR)**

(72) Inventors:
• **Sarlin, Rémi**
**26400 Allex (FR)**

• **Fauchery, Florent**
**26120 Montmeyran (FR)**

(74) Representative: **Kuhstrebe, Jochen**
**SKF GmbH**
**Gunnar-Wester-Straße 12**
**97421 Schweinfurt (DE)**

(56) References cited:
**WO-A2-2015/042632       GB-A- 2 559 403**
**US-A1- 2008 283 667       US-A1- 2017 327 157**

## Description

The present invention relates to the technical field of fail-safe systems intended for use in an aircraft. Document US2008283667 describes a hybrid composite-metal component including an elongate inner metal piece, an outer metal piece disposed about at least a portion of the inner metal piece, and composite material disposed between the inner metal piece and the outer metal piece.

Fail-safe systems are used in airframe architecture in order to improve the liability of systems embedded within an aircraft, such as the liability of the fastening of two components of the aircraft. In the latter case, a typical fail-safe system uses in parallel two different parts made of different material and each having two ends respectively secured to the two components. Classically, one part consists of aluminum whereas the other part consists of titanium.

The mechanical load entailed by the fastening of the two components is distributed on the two parts of the fail-safe system. Hence, one part is a principal load path whereas the other part is a secondary load path. The principal load path is normally the one sustaining the load during normal operation of the system.

If the part which is the principal load path breaks, for instance due to an excessive static load or fatigue, the other part sustains the load in place of the first. Therefore, the failure of the principal load path does not lead to a system dramatic failure.

A significant drawback of such a conventional fail-safe system is that corrosion or fatigue may occur and decrease the liability of the system. Furthermore, those systems entail a significant weight and are costly to manufacture.

The invention aims at overcoming the above-mentioned drawbacks.

More specifically, the invention aims at obtaining a fail-safe system which would deal better with corrosion and fatigue, without being significantly heavy.

According to a first aspect of the invention, it is proposed a fail-safe system as defined in claim 1.

Such an arrangement allows taking advantage of the strength of composite material in fatigue and of the very good specific weight of the composite material. Hence, the fail-safe system according to the invention is more resistant to fatigue and corrosion whereas it is lighter than fail-safe systems of the prior art.

Advantageously, each set includes two regions respectively adapted to be secured to the two aircraft components.

In an embodiment, the material of the first set and of the second set are mechanically bounded each other, for instance by gluing, welding or any joining technique. In an alternative embodiment, the material of the first set and of the second set are mechanically free from fastening.

Preferably, one of the first and second sets includes a metallic plate.

In an embodiment, each set includes a layer of composite material, the material composition of the layer of the first set and the material composition of the layer of the second set being different.

Such a particular arrangement allows obtaining a fail-safe system being a single multi-layer part, wherein one of the first and second sets constitutes a first load path and the other set constitutes a second load path. One may thus obtain the fail-safe effect while avoiding to double the number of parts, thus limiting considerably the increase of weight, cumbersomeness and manufacturing costs.

Advantageously, the first and second sets are cured simultaneously. Nevertheless, the first and second sets can be made as two different parts without departing from the scope of the invention.

Preferably, the composite material of the layer of the first set includes fibers having a first stiffness, the composite material of the layer of the second set including fibers having a second stiffness, the first stiffness and the second stiffness being different.

Hence, the fibers of one of the first and second sets may break whereas the fibers of the other of the first and second sets remain unbroken. The fail-safe effect is thus further improved.

One may also foresee a separation sheet inserted between the first set and the second set.

The failure of fibers of the composite material can release a lot of energy and act as a brittle failure, easily propagated to subsequent sets. Hence, the separation sheet acts as a failure propagation breaker in order to improve even more the fail-safe effect.

Advantageously, the separation sheet is made of a material having an elongation at break being at least equal to a minimum elongation at break, and:

$$e_{min} = 2 * \max(e_1, e_2)$$

wherein $e_{min}$ is the minimum elongation at break, $e_1$ is the elongation at break of the fibers of the first set and $e_2$ is the elongation at break of the fibers of the second set.

The choice of such a material increases considerably the efficiency of the separation sheet acting as a failure propagation breaker.

Preferably, the separation sheet includes an elastomer.

Such a material is particularly well adapted for use as a failure propagation breaker between a set including layers or plies of composite material and a set including a metallic plate or layers of composite material.

According to another aspect of the invention, a method of making a fail-safe system as defined above includes the following steps:

- at least partially making a first set,

- at least partially making a second set made of a material different from the material of the first set,
- stacking up the first set and the second set,
- wherein the step of making the first set and/or the step of making the second set includes using at least one layer of composite material.

Preferably, the step of making the first set includes stacking up a plurality of layers of a first composite material, the step of making the second set includes stacking up a plurality of layers of a second composite material, the first composite material and the second composite material being different, the method further including, after the step of making the second set, the step of curing the first set and the second set simultaneously.

According to a third aspect of the invention, it is proposed a use of a fail-safe system as defined above in an aircraft.

The present invention and its advantages will be better understood by studying the detailed description of specific embodiments given by way of nonlimiting examples and illustrated by the appended drawings on which:

- figure 1 is a perspective view of a fail-safe system according to a first example of the invention,
- figure 2 is a front view of the fail-safe system of figure 1,
- figure 3 is a cross-sectional view of the fail-safe system of figures 1 and 2,
- figure 4 is a perspective view of a fail-safe system according to a second example of the invention,
- figure 5 is a cross-sectional view of the fail-safe system of figure 4,
- figure 6 is a perspective view of a fail-safe system according to a third example of the invention,
- figure 7 is a cross-sectional view of the fail-safe system of figure 6,
- figure 8 is a perspective view of a fail-safe system according to a fourth example of the invention,
- figure 9 is a cross-sectional view of the fail-safe system of figure 8, and
- figure 10 illustrates a method of making a fail-safe system.

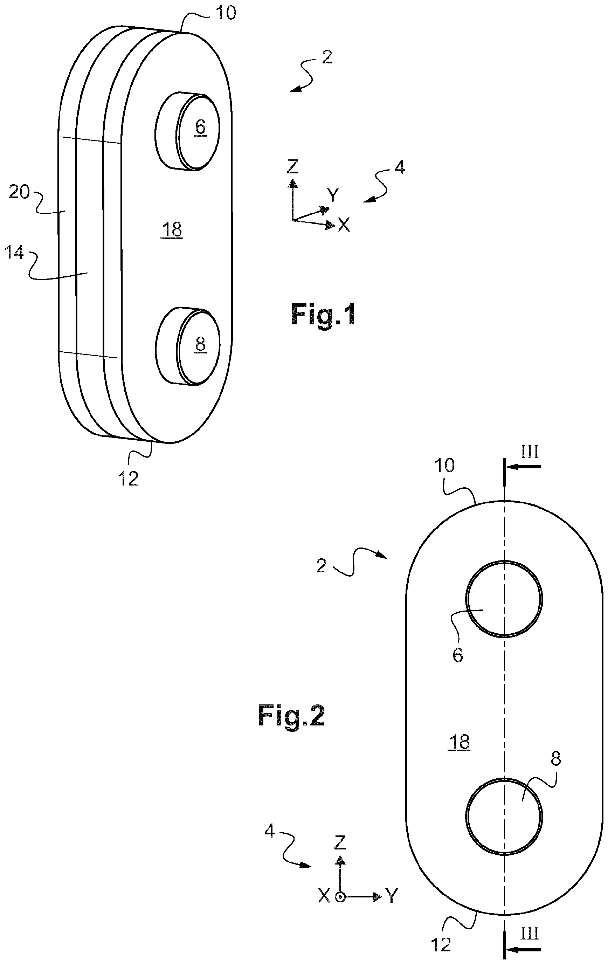

With reference to figure 1, it is schematically depicted a fail-safe system 2 according to a first example of the invention. The fail-safe system 2 is intended to be installed in an aircraft, more particularly in an airframe architecture. Nonetheless, the fail-safe system 2 may be used, without departing from the scope of the invention, in another section of the aircraft.

It is defined an orthonormal direct vector base 4 attached to the fail-safe system 2. The base 4 consists of a vector X, a vector Y and a vector Z.

In the present application, the terms "low" and "up" or variations thereof will be understood as referring relative to the base 4 when the vector Z is vertically upwardly directed.

As well, the word "cylindrical" will be understood according to its common definition, being namely that a cylindrical surface is a surface consisting of all the points on all the lines which are parallel to a given line and which pass through a fixed plane curve in a plane not parallel to the given line.

In the depicted example, the fail-safe system 2 aims at mechanically fastening two aircraft components 6 and 8. On figures 1 to 9, the components 6 and 8 are schematically depicted as cylindrical parts having a circular cross-section about an axis parallel to the vector X. Of course, any geometry of the aircraft components 6 and 8 can be used without departing from the scope of the invention.

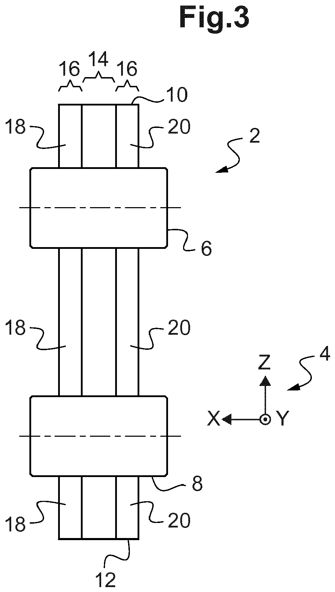

As visible on figures 1 and 2, the fail-safe system 2 has an elongated shape and its longitudinal direction is parallel to the vector Z. The cross-sectional view of figure 3 is taken along the plane III-III depicted on figure 2 and perpendicular to the vector Y. The fail-safe system 2 is mechanically secured, in vicinity of an upper end 10, to the aircraft component 6 and mechanically secured, in vicinity of a lower end 12, to the aircraft component 8. In the depicted examples, the fail-safe system 2 is mechanically secured to the aircraft components 6 and 8 by means of cylindrical bores (not referenced) respectively accommodating a portion of the aircraft components 6 and 8. Nevertheless, one may use a different securing means, not within the scope of the invention.

Referring now to figure 3, the fail-safe system 2 may be divided into a central set 14 and a peripheral set 16. The peripheral set 16 consists of two subsets 18 and 20. The set 14 and the subsets 18 and 20 are substantially plane and perpendicular to the vector X. The set 14 and the subsets 18 on 20 are stacked up, the set 14 being inserted between the subsets 18 and 20.

In the first example, the set 14 and the subsets 18 and 20 each consist of a plurality of plies or layers of composite material. The composite material composing the set 14 and the subsets 18 and 20 includes epoxy resin and stiffening fibers. The stiffening fibers of the composite material of the subsets 18 and 20 are different from the stiffening fibers of the composite material of the set 14. More specifically, the stiffness $s_{16}$ of the stiffening fibers of the subsets 18 and 20 is different from the stiffness $s_{14}$ of the stiffening fibers of the set 14.

In the present example, the stiffening fibers of the set 14 are carbon fibers and the stiffening fibers of the subsets 18 and 20 are glass fibers.

The use of two different sets made of two different materials, namely two composite materials whose stiffening fibers have respectively two different stiffnesses, allows answering the fail-safe requirement. For instance, the carbon composite set 14 may be the principal load path whereas the glass composite set 16 is the secondary load path. In those conditions, the set 14 sustains the load during the normal operation. If the set 14 breaks, the set 16 will be the one sustaining the load in place of the set 14. That is, the fail-safe function is ensured by means of a single multilayer composite part.

Although it has been assumed, in this example, that the central set 14 is the principal load path whereas the peripheral set 16 is the secondary load path, one may without departing from the scope of the invention, modify the composition and/or the dimensions of the sets 14 and 16 in such a way that the peripheral set 16 becomes the principal load path and the central set 14 becomes the secondary load path.

As well, one may, not within the scope of the invention, modify the set 16 in such a way that it includes only one of the subsets 18 and 20.

In the depicted examples, the sets 14 and 16 are each made of a plurality of layers of composite material. Nevertheless, one may imagine, without departing from the scope of the invention, that a set is made of only one ply of composite material.

The invention is not limited to the above-mentioned stiffening fibers. In particular, without departing from the scope of the invention, carbon fibers or glass fibers may be inversed or replaced with other fibers such as polymer fibers, flax fibers, basalt fibers, steel fibers, etc.

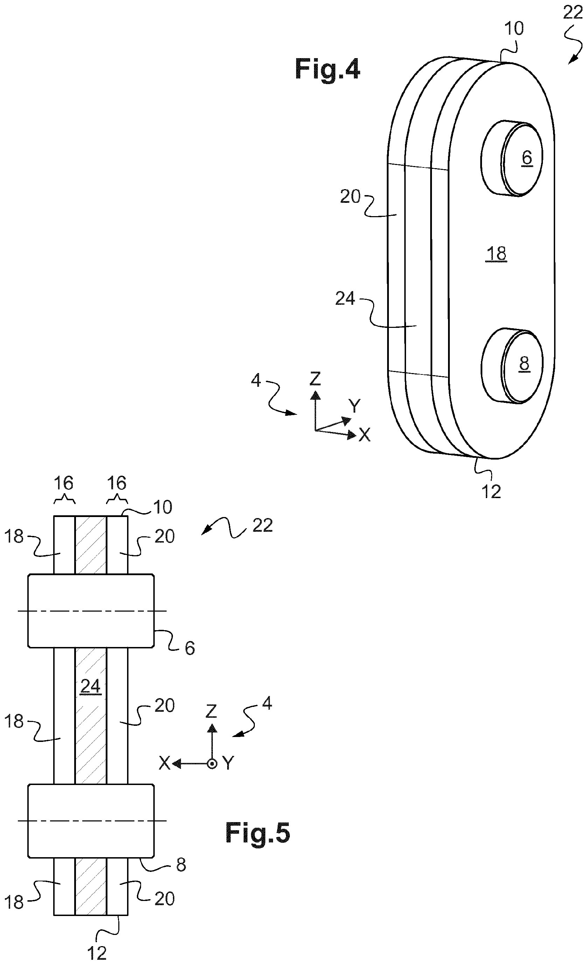

Figures 4 and 5 illustrate a fail-safe system 22 according to a second example of the invention. Same elements bear the same references. The cross-sectional view of figure 5 is taken along the same plane as the cross-sectional view of figure 3.

The fail-safe system 22 differs from the fail-safe system 2 in that the central set 14 is replaced with a central set 24 consisting of a metallic plate. The glass composite subsets 18 and 20 are overmold on the metallic plate 24.

In this example, for instance, the metallic plate 24 acts as a principal load path whereas the glass fibers composite set 16 acts as a secondary load path.

As well as in the first example, the glass fibers composite set 16 may act as a principal load path and the metallic plate 24 may act as a secondary load path. Also, in another variant, the set 24 may consist of a plurality of layers of composite material and the set 16 may consist of two metallic plate encompassing the composite set 24.

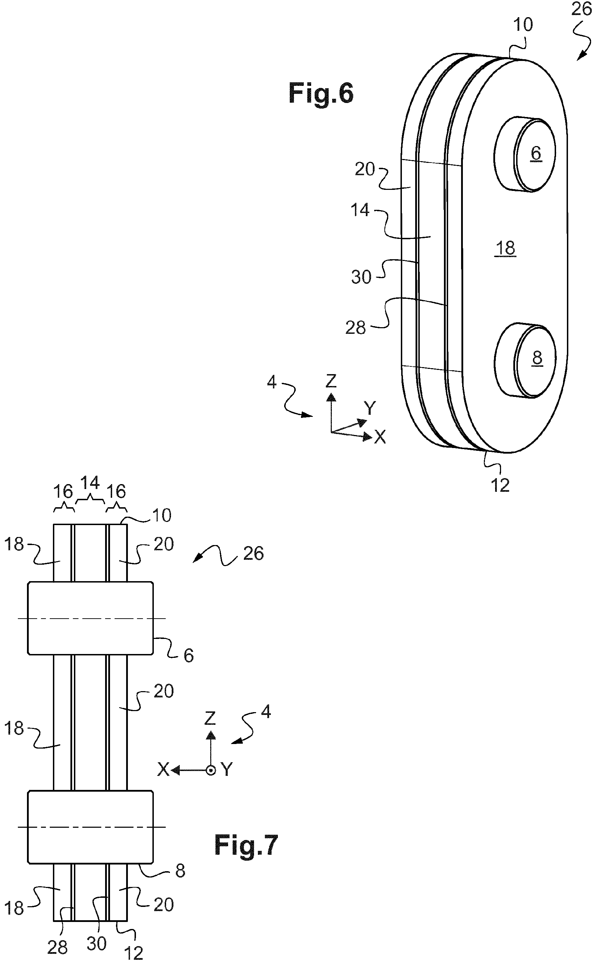

A fail-safe system 26 according to a third example of the invention is depicted in figures 6 and 7. Same elements bear the same references. The cross-sectional view of figure 7 is taken along the same plane as the cross-sectional view of figure 3.

The fail-safe system 26 differs from the fail-safe system 2 in that it further includes separation sheets 28 and 30 between the sets 14 and 16. Namely, the separation sheet 28 is inserted between the subset 18 and the set 14 and the separation sheet 30 is inserted between the set 14 and the subset 20.

The separation sheets 28 and 30 are made of a material having an elongation at break $e_{2830}$. The elongation $e_{2830}$ is higher than twice the elongation at break of the stiffening fibers of the most ductile of the sets 14 and 16. In other words:

$$e_{2830} \geq 2 * \max(e_{carbon}, e_{glass})$$

wherein $e_{carbon}$ and $e_{glass}$ are respectively the elongation at break of the carbon fibers and glass fibers.

In this example, the separation sheets 28 and 30 are made of an elastomer.

Although the separation sheets 28, 30 have been described referring to an example wherein each set is made of layers of composite material, separation sheets may be inserted next to the set 24 consisting of a metallic plate in the example of figures 4 and 5.

In the latter case, the elongation at break $e_{2830}$ of the separation sheets may be, for instance, higher than twice the elongation at break of the stiffening fibers of the composite set 16. That is, in the example of figures 4 and 5:

$$e_{2830} \geq 2 * e_{glass}$$

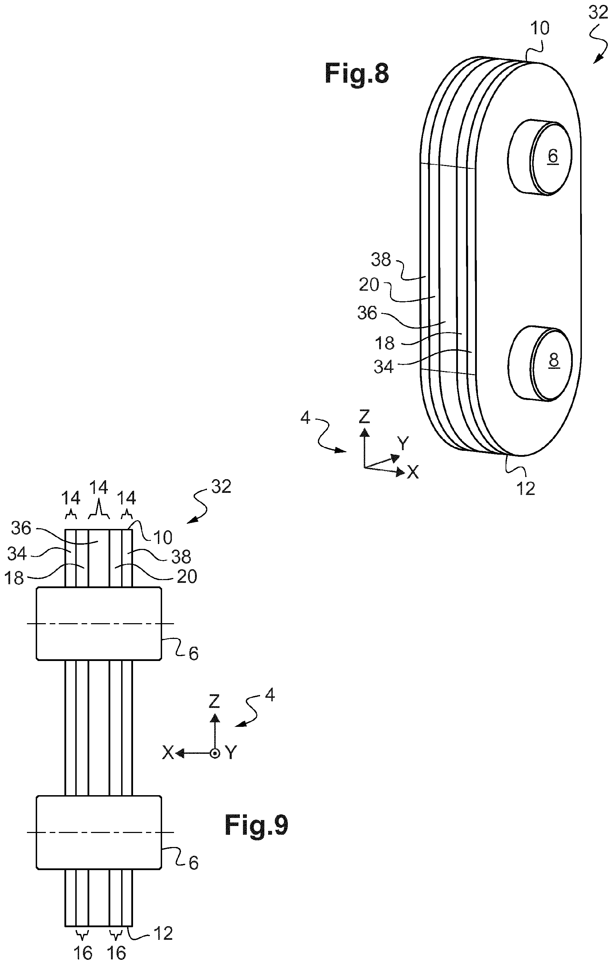

Figures 8 and 9 illustrate a fail-safe system 32 according to a fourth example of the invention. Same elements bear the same references. The cross-sectional view of figure 9 is taken along the same plane as the cross-sectional view of figure 3.

The fail-safe system 32 differs from the fail-safe system 2 in that the set 14 includes three subsets 34, 36 and 38. The subsets 34, 18, 36, 20 and 38 are stacked up in this order.

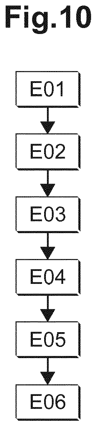

Referring now to figure 10, a method of making the fail-safe system 32 will now be described.

The method of figure 10 includes a first step E01 of making the subset 34. In step E01, a plurality of layers of carbon composite material are stacked up. Step E01 ends when the subset 34 is made up.

The method includes a second step E02 of making the subset 18. In step E02, a plurality of layers of glass composite material are stacked up directly on the subset 34 formed during previous step E01. Step E02 ends when the subset 18 is made up and stacked up on the subset 34.

The method further includes steps E03, E04 and E05 of making the respective subsets 36, 20 and 38 directly stacked up on the previously made up subsets. During each of the steps E03, E04 and E05, the subset which is made is directly formed by stacking up layers of composite material on the subsets which have been made during the previous steps. During steps E03 and E05, the layers of composite material which are stacked up includes carbon fibers whereas during step E04, the layers of composite material which are stacked up includes glass fibers. At the end of step E05, the sets 14 and 16 are made up and stacked up as illustrated on figures 8 and 9.

Then, the method of figure 10 includes a sixth step E06 of curing the sets 14 and 16 simultaneously. At the end of step E06, the sets 14 and 16 are stacked up to form a single multilayer composite material part.

That is, the method of figure 10 includes no more steps than a method of making a classic composite material part. Hence, the invention allows making a fail-safe system without increasing the manufacturing costs, without increasing the weight and without rendering components more cumbersome.

**Claims**

1. Fail-safe system (2, 22, 26, 32) intended to mechanically fasten two aircraft components (6, 8), the fail-safe system (2, 22, 26, 32) including a first set (14, 24), a second set (16) consisting of two subsets (18, 20) made of a material different from the material of the first set (14,24), the first set (14, 24) being inserted between the two subsets (18 and 20), the first set (14, 24) and the two subsets (18 and 20) of the second set (16) being stacked up, at least one of the first and second sets (14, 16) including at least one layer of composite material, **characterized in that** the first set (14,24) and the at least two subsets (18, 20) are substantially plane, and **in that** cylindrical bores extending through the thickness of the first (14, 24) and second (16) sets are respectively intended to accommodate a portion of the two aircraft components (6, 8) to mechanically secure to said components the fail-safe system .

2. System (22) according to claim 1, wherein one of the first and second sets (24, 16) includes a metallic plate.

3. System (2, 26, 32) according to claim 1, wherein each set (14, 16) includes a layer of composite material, the material composition of the layer of the first set (14) and the material composition of the layer of the second set (16) being different.

4. System (2, 26, 32) according to claim 3, wherein the composite material of the layer of the first set (14) includes fibers having a first stiffness, the composite material of the layer of the second set (16) including fibers having a second stiffness, the first stiffness and the second stiffness being different.

5. System (26) according to any of claims 1 to 4, further including a separation sheet (28, 30) inserted between the first set (14) and the second set (16).

6. System (26) according to claim 5 dependent to claim 4, wherein the separation sheet (28, 30) is made of a material having an elongation at break being at least equal to a minimum elongation at break, and :

$$emin = 2 * \max(e_1, e_2)$$

wherein *emin* is the minimum elongation at break, *ei* is the elongation at break of the fibers of the first set (14) and *ez* is the elongation at break of the fibers of the second set (16).

7. System (26) according to claim 5 or 6, wherein the separation sheet (28, 30) includes an elastomer.

8. Method of making a fail-safe system (2, 22, 26, 32) according to any of claims 1 to 7, including the following steps:

   - at least partially making (E01) a first set (14, 24), at least partially making (E02) a second set (16) made of a material different from the material of the first set (14, 24),
   - stacking up (E02) the first set (14, 24) and the second set (16),

   wherein the step (E0l) of making the first set (14, 24) and/or the step (E02) of making the second set (16) includes using at least one layer of composite material.

9. Method according to claim 8, wherein the step (E0l) of making the first set (14) includes stacking up a plurality of layers of a first composite material, the step (E02) of making the second set (16) includes stacking up a plurality of layers of a second composite material, the first composite material and the second composite material being different, the method further including, after the step (E02) of making the second set (16), the step of curing (E06) the first set (14) and the second set (16) simultaneously.

10. Use of a fail-safe system (2, 22, 26, 32) according to any of claims 1 to 7 in an aircraft.

**Patentansprüche**

1. Ausfallsicheres System (2, 22, 26, 32), das zur mechanischen Befestigung von zwei Flugzeugkomponenten (6, 8) vorgesehen ist, wobei das ausfallsichere System (2, 22, 26, 32) einen ersten Satz (14, 24) und einen zweiten Satz (16) einschließt, der aus zwei Teilsätzen (18, 20) besteht, die aus einem Material gefertigt sind, das sich von dem Material des ersten Satzes (14, 24) unterscheidet, wobei der erste Satz (14, 24) zwischen den beiden Teilsätzen (18 und 20) eingefügt ist, der erste Satz (14, 24) und die beiden Teilsätze (18 und 20) des zweiten Satzes (16) aufeinander gestapelt sind, mindestens einer von dem ersten und dem zweiten Satz (14, 16) mindestens eine Schicht aus Verbundmaterial einschließt, **dadurch gekennzeichnet, dass** der erste Satz (14, 24) und die mindestens zwei Teilsätze (18, 20) im Wesentlichen planar sind, und dass sich durch die Dicke des ersten (14, 24) und zweiten (16) Satzes hindurch zylindrische Bohrungen erstrecken, die jeweils vorgesehen sind, um einen Anteil der beiden Flugzeugkomponenten (6, 8) zu beherbergen, um die Komponenten des ausfallsicheren Systems mechanisch zu sichern.

2. System (22) nach Anspruch 1, wobei einer von dem ersten und dem zweiten Satz (24, 16) eine Metallplatte einschließt.

3. System (2, 26, 32) nach Anspruch 1, wobei jeder Satz (14, 16) eine Schicht aus Verbundmaterial einschließt, wobei die Materialzusammensetzung der Schicht des ersten Satzes (14) und die Materialzusammensetzung der Schicht des zweiten Satzes (16) unterschiedlich sind.

4. System (2, 26, 32) nach Anspruch 3, wobei das Verbundmaterial der Schicht des ersten Satzes (14) Fasern mit einer ersten Steifheit einschließt, das Verbundmaterial der Schicht des zweiten Satzes (16) Fasern mit einer zweiten Steifheit einschließt, wobei die erste Steifheit und die zweite Steifheit unterschiedlich sind.

5. System (26) nach einem der Ansprüche 1 bis 4, des Weiteren einschließend eine Trennlage (28, 30), die zwischen dem ersten Satz (14) und dem zweiten Satz (16) eingefügt wird.

6. System (26) nach Anspruch 5 in Abhängigkeit von Anspruch 4, wobei die Trennlage (28, 30) aus einem Material mit einer Bruchdehnung gefertigt wird, die mindestens gleich einer Mindestbruchdehnung ist, und

$$emin = 2 * \max(e_1, e_2)$$

wobei *emin* die Mindestbruchdehnung ist, *ei* die Bruchdehnung der Fasern des ersten Satzes (14) ist, und *ez* die Bruchdehnung der Fasern des zweiten Satzes (16) ist.

7. System (26) nach Anspruch 5 oder 6, wobei die Trennlage (28, 30) ein Elastomer einschließt.

8. Verfahren zur Fertigung eines ausfallsicheren Systems (2, 22, 26, 32) nach einem der Ansprüche 1 bis 7, das die folgenden Schritte einschließt:

  - mindestens teilweise Fertigen (E01) eines ersten Satzes (14, 24), mindestens teilweise Fertigen (E02) eines zweiten Satzes (16), der aus einem Material gefertigt ist, das sich von dem Material des ersten Satzes (14, 24) unterscheidet,
  - Aufstapeln (E02) des ersten Satzes (14, 24) und des zweiten Satzes (16),

  wobei der Schritt (E01) des Fertigens des ersten Satzes (14, 24) und/oder der Schritt (E02) des Fertigens des zweiten Satzes (16) die Verwendung von mindestens einer Schicht aus Verbundmaterial einschließt bzw. einschließen.

9. Verfahren nach Anspruch 8, wobei der Schritt (E01) des Fertigens des ersten Satzes (14) Aufstapeln einer Vielzahl von Schichten eines ersten Verbundmaterials einschließt, der Schritt (E02) des Fertigens des zweiten Satzes (16) das Aufstapeln einer Vielzahl von Schichten eines zweiten Verbundmaterials einschließt, wobei das erste Verbundmaterial und das zweite Verbundmaterial unterschiedlich sind, wobei das Verfahren des Weiteren nach dem Schritt (E02) des Fertigens des zweiten Satzes (16) den Schritt des simultanen Härtens (E06) des ersten Satzes (14) und des zweiten Satzes (16) einschließt.

10. Verwendung eines ausfallsicheren Systems (2, 22, 26, 32) gemäß einem der Ansprüche 1 bis 7 in einem Flugzeug.

**Revendications**

1. Système à sécurité intégrée (2, 22, 26, 32) destiné à fixer mécaniquement deux composants d'aéronef (6, 8), le système à sécurité intégrée (2, 22, 26, 32) comprenant un premier ensemble (14, 24), un second ensemble (16) consistant en deux sous-ensembles (18, 20) réalisés en un matériau différent du matériau du premier ensemble (14, 24), le premier ensemble (14, 24) étant inséré entre les deux sous-ensembles (18 et 20), le premier ensemble (14, 24) et les deux sous-ensembles (18 et 20) du second ensemble (16) étant empilés, au moins l'un des premier et second ensembles (14, 16) comprenant au moins une couche de matériau composite, **caractérisé en ce que** le premier ensemble (14, 24) et les au moins deux sous-ensembles (18, 20) sont sensiblement plans, et **en ce que** des alésages cylindriques s'étendent à travers l'épaisseur des premier (14, 24) et second (16) ensembles sont respectivement destinés à accueillir une partie des deux composants d'aéronef (6, 8) afin de fixer mécaniquement auxdits composants le système à sécurité intégrée.

2. Système (22) selon la revendication 1, dans lequel l'un des premier et second ensembles (24, 16) comprend une plaque métallique.

3. Système (2, 26, 32) selon la revendication 1, dans lequel chaque ensemble (14, 16) comprend une couche de matériau composite, la composition du matériau de la couche du premier ensemble (14) et la composition du matériau de la couche du second ensemble (16) étant différentes.

4. Système (2, 26, 32) selon la revendication 3, dans lequel le matériau composite de la couche du premier ensemble (14) comprend des fibres ayant une première rigidité, le matériau composite de la couche du second ensemble (16) comprenant des fibres ayant une seconde rigidité, la première rigidité et la seconde rigidité étant différentes.

5. Système (26) selon l'une quelconque des revendications 1 à 4, comprenant en outre une feuille de séparation (28, 30) insérée entre le premier ensemble (14) et le second ensemble (16).

6. Système (26) selon la revendication 5 dépendant de la revendication 4, dans lequel la feuille de séparation (28, 30) est réalisée en un matériau ayant un allongement à la rupture au moins égal à un allongement à la rupture minimum, et :

$$emin = 2 * \max(e_1, e_2)$$

dans laquelle *emin* est l'allongement à la rupture minimum, *ei* est l'allongement à la rupture des fibres du premier ensemble (14) et ez est l'allongement à la rupture des fibres du second ensemble (16).

7. Système (26) selon la revendication 5 ou 6, dans lequel la feuille de séparation (28, 30) comprend un élastomère.

8. Procédé de fabrication d'un système à sécurité intégrée (2, 22, 26, 32) selon l'une quelconque des revendications 1 à 7, comprenant les étapes suivantes :

   - la fabrication au moins partielle (E01) d'un premier ensemble (14, 24), la fabrication au moins partielle (E02) d'un second ensemble (16) réalisé en un matériau différent du matériau du premier ensemble (14, 24),
   - l'empilement (E02) du premier ensemble (14, 24) et du second ensemble (16),

   l'étape (E01) de fabrication du premier ensemble (14, 24) et/ou l'étape (E02) de fabrication du second ensemble (16) comprenant l'utilisation d'au moins une couche de matériau composite.

9. Procédé selon la revendication 8, dans lequel l'étape (E01) de fabrication du premier ensemble (14) comprend l'empilement d'une pluralité de couches d'un premier matériau composite, l'étape (E02) de fabrication du second ensemble (16) comprend l'empilement d'une pluralité de couches d'un second matériau composite, le premier matériau composite et le second matériau composite étant différents, le procédé comprenant en outre, après l'étape (E02) de fabrication du second ensemble (16), l'étape de durcissement (E06) du premier ensemble (14) et du second ensemble (16) simultanément.

10. Utilisation d'un système à sécurité intégrée (2, 22, 26, 32) selon l'une quelconque des revendications 1 à 7 dans un aéronef.

**Fig.1**

**Fig.2**

# Fig.3

Fig.4

Fig.5

**Fig.6**

**Fig.7**

**Fig.8**

**Fig.9**

# Fig.10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008283667 A